Europäisches Patentamt

European Patent Office

Office européen des brevets

Publication number: **0 286 392**
**A2**

# EUROPEAN PATENT APPLICATION

(21) Application number: 88303085.0

(22) Date of filing: 31.03.88

(51) Int. Cl.⁴ **B64G 1/40**

(30) Priority: 04.04.87 GB 8708100

(43) Date of publication of application:
**12.10.88 Bulletin 88/41**

(84) Designated Contracting States:
**DE FR GB IT NL**

(71) Applicant: **BRITISH AEROSPACE PUBLIC LIMITED COMPANY**
**11 Strand**
**London WC2N 5JT(GB)**

(72) Inventor: **Grimes, Colin Thomas British Aerospace P.L.C.**
**Dynamics Division Manor Road**
**Hatfield Hertfordshire, AL10 9LL(GB)**
Inventor: **Harding, Robert Anthony British Aerospace P.L.C.**
**Dynamics Division Manor Road**
**Hatfield Hertfordshire, AL10 9LL(GB)**
Inventor: **Blossom, Richard Anthony British Aerospace P.L.C.**
**Dynamics Division Manor Road**
**Hatfield Hertfordshire, AL10 9LL(GB)**

(74) Representative: **Dowler, Edward Charles et al**
**British Aerospace Public Limited Company**
**Corporate Patents Department Brooklands Road**
**Weybridge Surrey, KT13 OSJ(GB)**

(54) Spacecraft propellant tank.

(57) A propellant tank for a spacecraft. The propellent container of the tank is formed by superplastically deforming a titanium alloy preform into a desired tank shape. Thus, the container of the tank assembly is in the form of a one piece housing. Further, a propellant/pressurizing gas separator is provided in the form of a bladder or a ballon-like inflatable member which is inserted into the tank by way of a relatively small aperture in the tank and is coupled to a gas entry port so that the inflatable member can be inflated within the tank to expel propellant from the tank interior. Various mounting brackets for mounting the tank assembly to the spacecraft are also disclosed.

# SPACECRAFT PROPELLANT TANK

## BACKGROUND OF THE INVENTION

### 1. Field of the Invention

The present invention relates to a tank and, more particularly, to a propellant tank for a spacecraft.

### 2. Description of the Related Prior Art

Heretofore, spacecraft propellant tanks have typically been formed from two hemispherical members machined from, for example, a titanian alloy and coupled together about the edges thereof so as to form a spherical tank. An elastic membrane known as a separator is mounted between the two hemispheres during their assembly so as to divide the interior of the tank into two compartments. One of the hemispherical members of the tank has a propellant outlet port through which the tank is filled with propellant prior to launch of the spacecract. Filling the tank in this manner deforms the separator and deflects the same into the interior of the other hemispherical member. The other hemispherical member has a pressure inlet port through which gas is admitted during use to urge the separator against the propellant and, thus, force feed the propellant from the outlet port of the first hemispherical member.

Housings having collapsible bladders therein for pressurizing fluid and expelling the same are known generally in the field of fluid dispensing and similar structures have also been used in the field of hydraulic engineering to act upon other mediums. More particularly, in the field of hydraulic engineering, devices called "hydropneumatic accumulators" are known which comprise generally cylindrical steel containers having a port at one end for coupling to an oil pipeline and containing an elongate rubber bladder which can be pressurized via a one way gas inlet at the other end of the container. The function of the pressurized bladder is to act upon fluid in the pipeline which fluid also fills the container around the bladder. Thus, the pressurized bladder smooths pressure pulsations in the pipeline.

## SUMMARY OF THE INVENTION

It is an object of the present invention to provide a propellant tank for a spacecraft having a simpler structure than the spacecraft propellant tank of the prior art and yet which can effectively force feed propellant from an outlet port of the tank. To achieve this object, the tank of the present invention is formed by superplastically deforming a titanium alloy preform into a desired tank shape. Thus, the tank of the present invention is in the form of a one piece housing thereby eliminating the need for coupling two hemispherical halves together. Further, in accordance with the present invention, a propellant/pressurizing gas separator is provided in the form of a bladder or a ballon-like inflatable member which is inserted into the tank by way of a relatively small aperture in the tank and is coupled to a gas entry port so that the inflatable member can be inflated within the tank to expel propellant from the tank interior.

Other objects, features and characteristics of the present invention, as well as the methods of operation and functions of the related elements of the structure, and the combination of parts and economies of manufacture, will become more apparent upon consideration of the following detailed description and the appended claims with reference to the accompanying drawings all of which form a part of this specification, wherein like reference numerals designate corresponding parts in the various figures.

## BRIEF DESCRIPTION OF THE DRAWINGS

FIGURE 1 is a schematic view, partly in cross-section and partly broken away for clarity, of a tubular preform positioned within a mold prior to forming the container of the present invention;

FIGURE 2 is a schematic view, partly in cross-section and partly broken away for clarity, of a tank formed from superplastically deforming the preform of FIGURE 1;

FIGURE 3 is a schematic cross-sectional view, partly broken away for clarity of a tank assembly formed in accordance with the present invention;

FIGURE 4 is a schematic cross-sectional view, partly borken away for clarity, of an alternate embodiment of a tank formed in accordance with the present invention;

FIGURE 5 is a schematic elevational view, partly in section and partly broken away for clarity, of an alternate embodiment of the tank assembly formed in accordance with the present invention;

FIGURE 6 is an enlarged view of the anti-extrusion grid of the tank assembly of FIGURE 5;

FIGURE 7 is a schematic view, partly in section and partly broken away for clarity, of the gas port of the tank assembly of FIGURE 5;

FIGURE 8 is a prospective view, partly broken away and partly in section, showing a tank assembly formed in accordance with the present invention having mounted brackets bonded thereto for mounting to a spacecraft;

FIGURE 9 is a front view of a tank formed in accordance with the present invention having an alternate mounting sturcture;

FIGURE 10 is a top plan view of the assembly of FIGURE 9;

FIGURE 11 is a front view of a tank formed in accordance with the present invention with another mounting structure;

FIGURE 12 is a top plan view of the assembly of FIGURE 11;

FIGURE 13 is a front view illustrating an alternative arrangement for a securing the tank in postion within the spacecraft;

FIGURE 14 illustrates yet another mounting structure for the tank of the present invention;

FIGURE 15 illustrates a tank formed in accordance with the present invention having another attachment structure;

FIGURE 16 is a front view, partly broken away for clarity, showing a further attachment structure; and

FIGURE 17 is a top plan view of the attachment structure of FIGURE 16.

## DETAILED DESCRIPTION OF THE PREFERRED EMBODIMENT

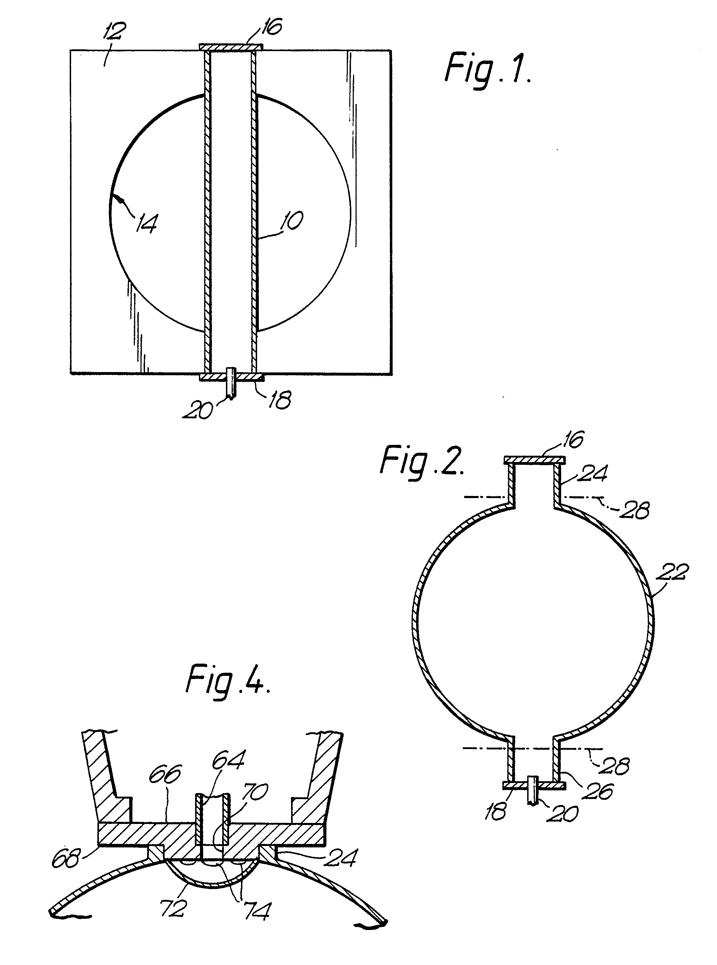

The propellant container for the tank assembly of the present invention is preferably formed from a tubular preform 10 of, for example, a Titanium alloy (6AL4V) which is positioned in a mold 12 defining a female mold surface 14. In the embodiment illustrated in FIGURE 1, the mold defines a spherical surface. One end of the preform tube is closed by, for example, a plate 16 which has been welded thereto and the other end of the tube is closed by another plate 18 which includes a pressure entry port 20. The preform assembly is then heated to a temperature range which permits superplastic deformation of the material of the preform tube. At that temperature a pressure is applied via port 20 so that tube 10 will be superplastically deformed within the mold cavity so as to define a container 22 having shape corresponding to the interior of the mold. In the illustrated embodiment, mold 12 defines short end portions surrounding the end portions of the tube so that the ends of tube 10 are not deformed during the superplastic deformation process. The resulting structure as shown in, FIGURE 2, is a spherical container with opposite cylindrical end portions 24, 26. The cylindrical end portions 24, 26 are cut off as indicated by phantom lines 28 and resultant openings are sealed, as discussed more fully below.

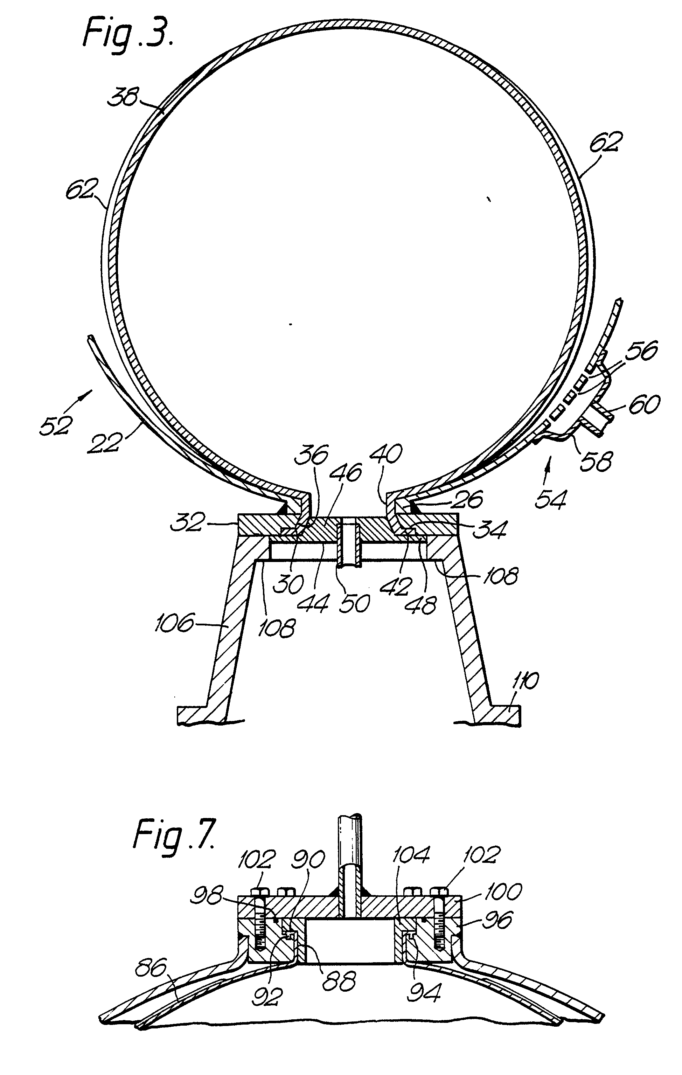

Referring to FIGURE 3, a disc element 32 formed, for example, from Titanium and having a central aperture 30 is then TIG welded (Titanum arc/inert gas) or electronic beam welded to the remaining portion of cylindrical end 26. A recess 34 is defined about the inner periphery of the outer flat surface of disc 32. Further, the inner surface 36 of disc 32 is conical having a diameter which gradually decreases from a maximum diameter adjacent recess 34 to a minimum diameter adjacent the inner flat surface of disc 32 which is in facing relation to container 22. As can be seen in FIGURE 3, in particular, an inflatable bladder 38 having a short neck portion 40 and an outwardly extending flange 42 at the outer end of neck portion 40 is inserted into container 22. The neck 40 of the bladder fits within the remaining portion of cylindrical end 26 and the conical inner surface 36 of inner disc 32. Flange 42 of bladder 38 is then disposed within recess 34 of disc 32.

A plug 44 having a conical portion 46 and an outwardly extending flange 48 is fixed to disc 32, for example, by bolts (not shown in particular) so that the conical portion 46 is disposed within the cavity defined by the conical inner surface 36 of disc 32 so that neck 40 of bladder 38 is disposed between plug 44 and disc 32 with flange 48 of plug 44 overlaying flange 42 of bladder 38. Thus neck 40 and flange 42 of bladder 38 are clamped in fluid tight relation between plug 44 and disc 32.

Plug 44 also includes a pressure entry port 50 through which the bladder can be inflated during operation of the tank assembly 52. As illustrated in FIGURE 3, when the bladder is in its unstressed, uninflated, natural state, it does not collapse completely, unlike typical rubber toy balloons. Thus bladder 38 will collapse only where the external pressure applied thereto is greater than the pressure within the bladder. Accordingly, the bladder can be collapsed by mechanical pressure such as being folded by hand and can be inserted into container 22 following folding by hand. In use, as will become more apparent below, bladder 38 is filled within the propellant tank assembly 52 through pressure entry port 50 to exert pressure on propellant disposed within container 22 and in surrounding relation to bladder 38.

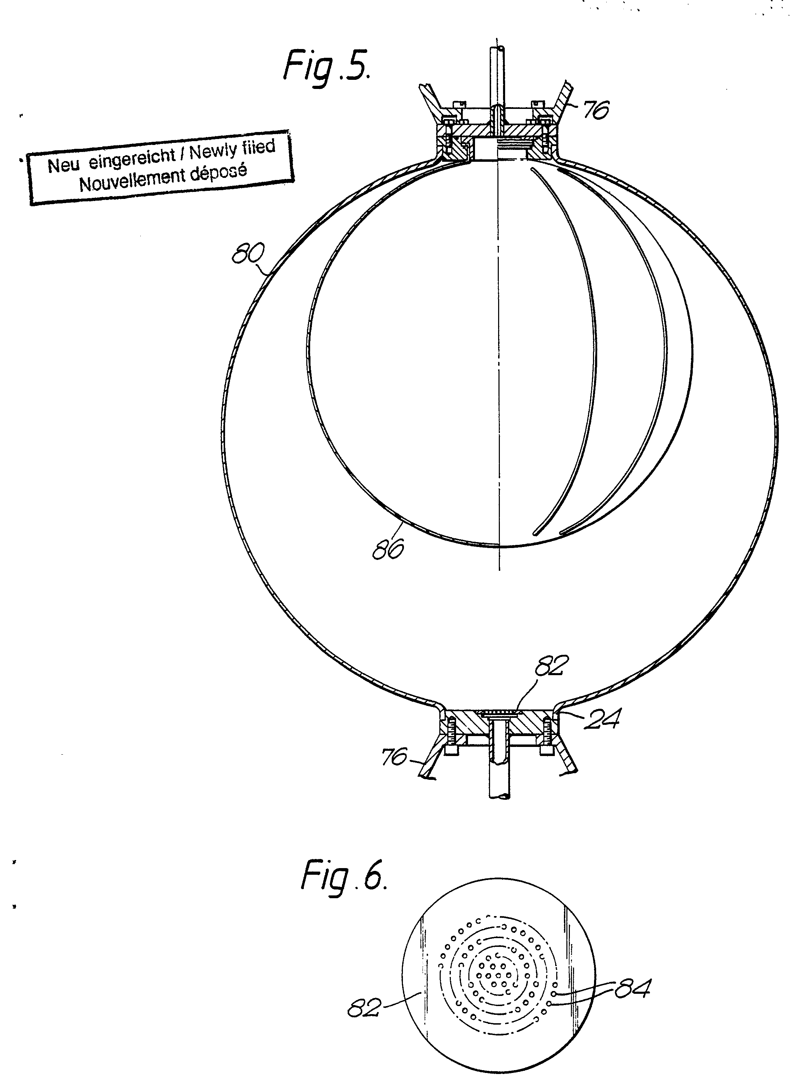

As can be seen in FIGURE 3, the propellant outlet 54 from the tank assembly 52 may be formed by drilling a matrix of small holes 56 into the side of container 22 and fixing a cup shaped member 58 having an outlet duct 60 in surrounding relation to the matrix of holes 56. Such a cup shaped member 58 can be, for example, welded or diffusion bonded to the surface of container 22. It is preferred that a matrix of holes 56 be provided rather than simply coupling outlet duct 60 to a correspondingly sized hole in the wall of the container as such a large hole would increase the likelihood that the wall of the bladder would enter and be distorted or "extruded" within the hole as the bladder is inflated. Providing a matrix of small holes 56, on the other hand, prevents extrusion of the bladder into the outlet duct 60. It is to be understood, however, that other means for preventing blockage of the outlet by the bladder and extrusion of the bladder wall can be provided, as for example, is shown in FIGURE 4, and will be discussed more fully below.

As can be seen, for example, in FIGURE 3, in order to ensure that the propellant within container 22 always has a flow path to the outlet duct 60, the outer surface of bladder 38 is preferably provided with a series rib elements 62 spaced about the circumference thereof (only two of which are shown in FIGURE 3 for clarity). Thus, when bladder 38 is fully inflated, ribs 62 contact the interior surface of container 22 and maintain the remainder of the outer bladder wall in spaced relation to the interior of the container.

An alternate tank outlet structure in accordance with the present invention is shown in FIGURE 4. In this embodiment, a plug shaped member 66 having a flange 68 is welded to the remaining portion of cylindrical end 24 and a mounted bracket, discussed more fully below, is fixed thereto. Plug shaped member 66 has a central aperture 70 to which propellant outlet 64 is coupled. A cover 72 can be mounted interiorly of container 22 so as to cover the outlet aperture. Cover 72 has spaced passages 74 to allow the propellant to be expelled from the container interior. In this manner, cover 70 will prevent bladder 38 from engaging and being extruded into the outlet aperture. In the alternative, the cover can have an array of small perforations therein (FIGURE 6) to allow expression of the propellant.

An alternative and most preferred embodiment of the tank assembly of the invention will now be described with reference to FIGURES 5-7.

As can be seen in FIGURE 5, in this embodiment the container wall 80 is thinner in region of the mid portion or equator thereof than at the fluid and gas ports where the mounting brackets 76 are disposed (discussed more fully below) and hence where more wall strength is required. The variation in thickness of the container can be achieved by, for example, appropriately controlling the superplastic deformation phase of forming the container. A grid 82 or the like with a plurality of aperatures 84 (FIGURE 6) is preferably mounted to the outlet opening of the container to prevent extrusion of the bladder. As can be seen, in this embodiment the outlet is defined at severed cylindrical end portion 24, as was described with reference to FIGURE 4.

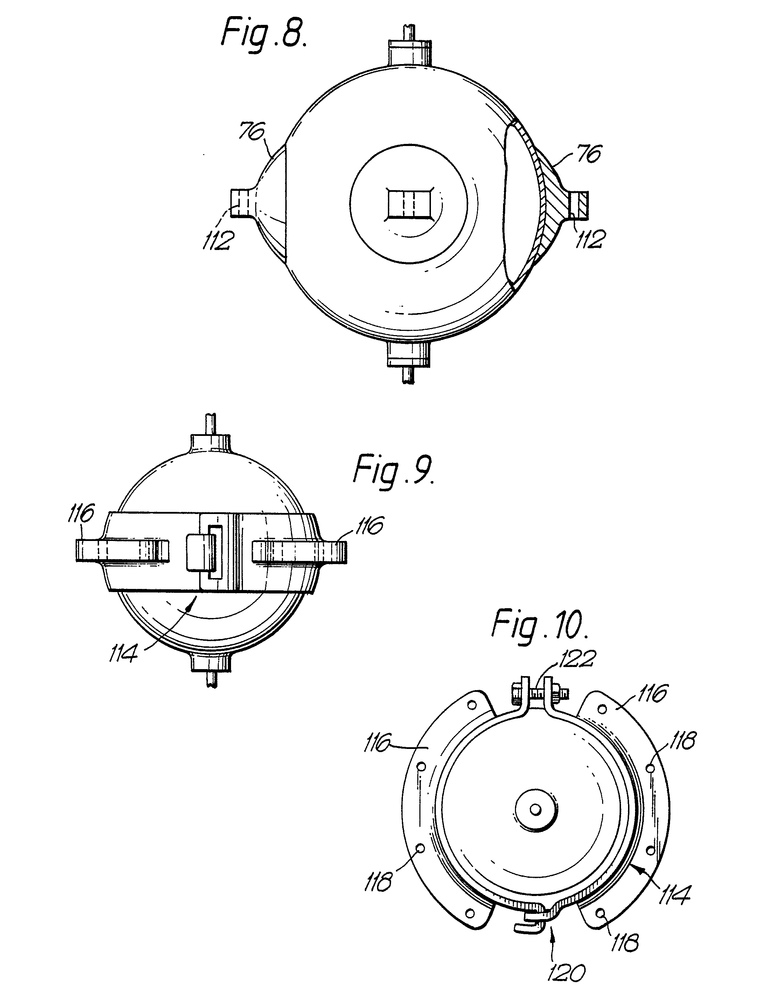

As can be further seen in particular in FIGURE 7, the bladder or separater 86 has a neck 88 with a flange 90 and an annular projection 92 which fits into a corresponding slot 94 defined in disc member 96. An O-ring seal 98 is further provided intermediate disc 96 and a cover plate 100 which is fixed to disc 96 by, for example screws 102. A clamping plug 104 is further provided and is held in place by cover plate 100. As can be seen, clamping plug 104 is conical in shape, as was plug 44 shown in FIGURE 3 to ensure the bladder is clamped in a fluid tight manner between plug 104 and disc 96.

The tank formed as described above is mounted within the spacecraft by means of mounting brackets 76, for example, which are fixed to container 22 at the location of cylindrical ends 24 and 26. One such bracket 76 is shown in FIGURE 3 and is defined by a frusto-conical member 106 mounted to the disc 32 by, for example, bolts (not shown). Frusto-conical member 106 is preferably formed from a Titanian alloy and has flanges at both ends. The inwardly extending flange 108 is disposed at the narrow end of member 106 and is fixed to disc 32 as noted above, about plug 44 by, for example, bolts (not shown). Likewise in the embodiment of FIGURES 5-7 the bracket 76 is mounted to cover plate 100. The outwardly extending flange 110 is fixed to the spacecraft structure (not shown) in any suitable manner.

Where the propellant outlet is defined in the side of the container as shown in the embodiment of FIGURE 3, the remaining cylindrical end portion 24 can be simply sealed off by welding a plate (not shown) thereto. A mounting bracket 76, for example, of the type described above can be fixed to the plate which has welded to the container. Where the outlet is defined at the location of cylindrical end 24, as shown in the embodiment of FIGURES 4 and 5, a bracket 76 can be mounted to plug 44/104.

While the tank illustrated in the FIGURES 3, 4 and 6 includes polar mounting brackets, it is to be understood that mounting brackets for the tank need not be mounted at the diametric opposite ends of container. In the alternative or additionally further mounted members can be fixed by, for example, diffusion bonding, TIG welding or some other suitable attachment means to the spherical outer surface of the container.

Referring to FIGURE 8, then, mounting brackets 76 can be coupled at spaced locations about the mid portion or equator of the tank by, for example, diffusion bonding. Bracket holes 112 are provided so that the tank can be fixed by means of bolts, for example, (not shown) to correspondingly disposed brackets within the spacecraft.

In the alternative, as shown in FIGURES 9 and 10, a two part clamp 114 having the flanges 116 and bolt holes 118 can be mounted to the tank. As can be seen, the two halves of clamp 114 are hinged at one end thereof as at 120, have a curved inner surface corresponding to the curvature of the tank, and are fixedly mounted about the mid portion of the tank by a clamp bolt 122.

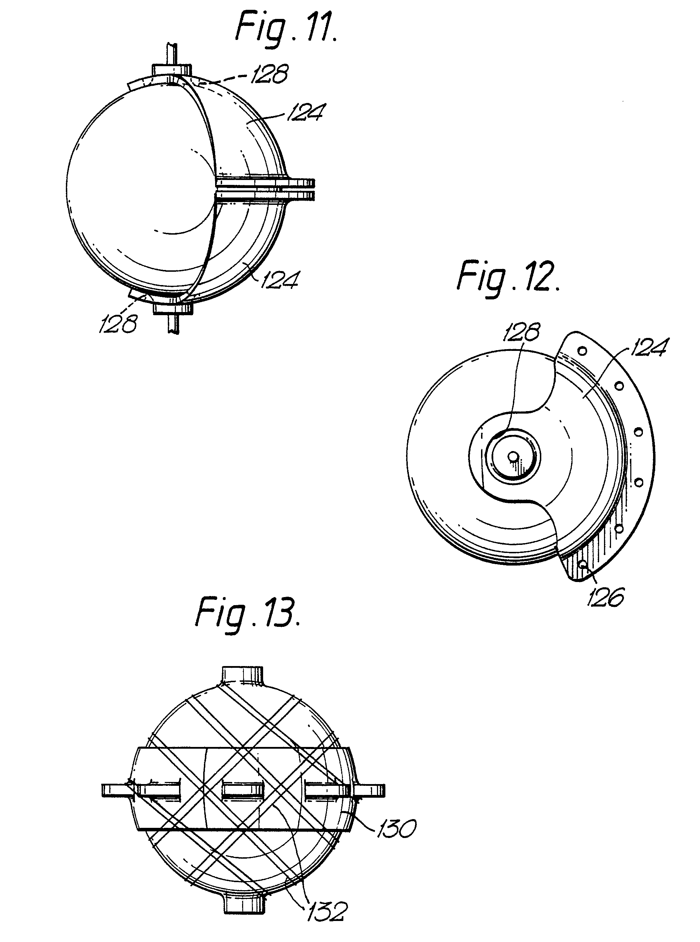

Yet another alternate mounting assembly is shown in FIGURES 11 and 12. As can be seen, in this embodiment part spherical clamp members 124 are provided and extend from respective pole portions of the tank and are fixed together and to the spacecraft structure (not shown) through bolt holes 126. Gas inlet and propellant outlet portions of the tank extend through correpondingly disposed apertures 128 in the pole portions of the spherical clanp members.

Referring to FIGURE 13, a collar 130 can be provided which is separated into two or more parts so that it can be mounted about the mid-portion of the tank and fixed thereto by, for example, overwinding the entire tank with a resin impregnated reinforcing filament 132, for example Kevlar. The resin is then cured. The overwinding can be effected by winding a resin impregnated film or tape made of filaments onto the tank or by winding unimpregnated filaments or tape onto the tank and then impregnating the same with a liquid resin. The most appropriate winding method can, of course, be selected by the ordinary artisan. Furthermore, the filaments 132 shown in FIGURE 13 are merely schematic. Indeed, it is to be understood that where a resin impregnated filament is to be wound about the tank, the entire surface of the tank should be covered to define a filament reinforced plastic material outer skin. This in turn will enable the metal inner skin or wall to be thinner for given propellant tank requirements. The above wrapping technique is known per se for spacecraft pressurant tanks.

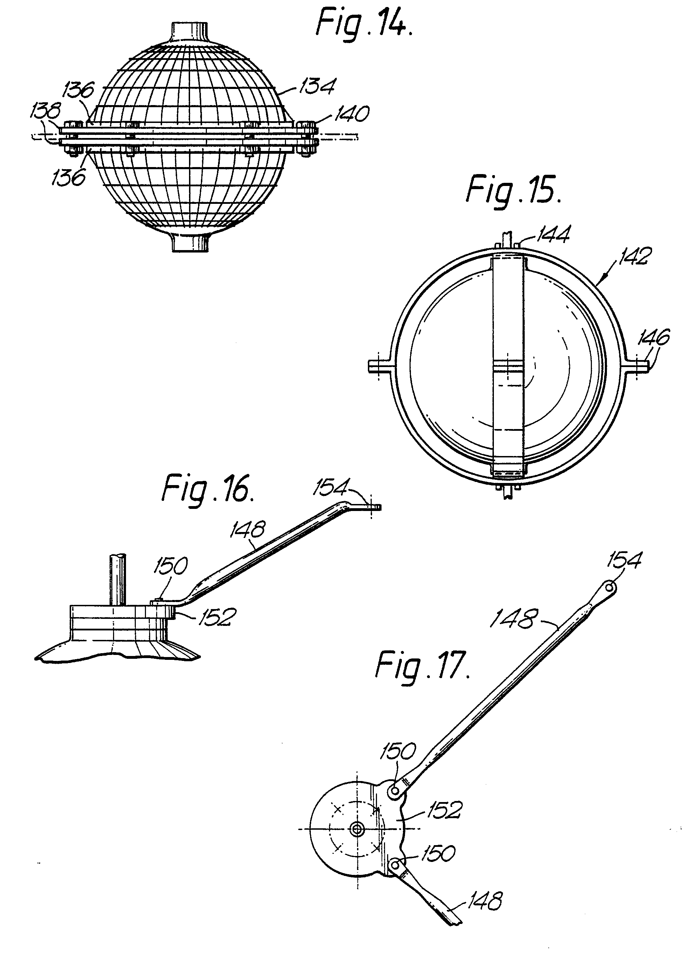

A further mounting assembly is shown in FIGURE 14. In this embodiment, the tank is supported between two shaped pieces of tough netting material 134, for example made of Kevlar. Each piece of netting is fixed to a ring 136 having a flange 138. The two flanges 138 are bolted together, the netting material 134 pulled taught about the tank and the tank fastened to the spacecraft by means of bolts 140. More particularly, for example, after the tank has been lowered into position through a hole in a flat plate mounting platform (shown in phantom lines) the flanges are bolted together across the platform thus securing the flanges to one another and to the spacecraft structure.

Referring to FIGURE 15, as a further alternative, four semi-circular straps 142 can be fixed by, for example, bolts 144 to the gas inlet and propellant outlet structures of the tank. Each semi-circular strap 142 is preferably formed from two arc shaped straps each of which has a lug 146, the lugs 146 being coupled together to define the strap 142. The coupled lugs in turn define a mounting surface by which the tank assembly can be mounted to the spacecraft by, for example bolts.

A variety of attachment structures may be provided in addition to those discussed above which will enable the propellant tank to be mounted in irregularly shaped spaces. A typical mounting structure for an irregularly shaped space is shown in FIGURES 16 and 17. As can be seen, one or more brackets 148 are mounted at one end thereof by bolts 150 to a bracket mounting plate 152 which is fixed to disc element 32, plug 66, or cover plate 100 by, for example, bolts (not shown). The opposite end of each bracket 148 has an aperture 154 for bolting the same to the spacecraft structure. While only two brackets are shown, it is to be understood that the number and disposition of the brackets would depend on the mass and dynamic load considerations.

As noted above, each of the foregoing mounting structures can be provided on the tank assembly in addition to brackets 76 as for example are shown in FIGURES 3, 4 or 5 or may be substituted therefor.

The bladder of the invention as described above can be made of any suitable material but it is preferably made from EPDM (Ethylene Propylene Diene Monomer rubber). The material for the bladder and appropriate characteristics of the material such as, for example, the Shore D hardness will be readily appreciated by the ordinary artisan in view of the desired range of inflation of the bladder, the thickness of the bladder and the propellent to be expelled thereby as the bladder material must be compatible with the propellant (typically hydrazine).

Likewise the dimensions of the container would depend on the desired capacity, the pressures to which it will be exposed and the type of propellant. By way of example, the container as formed and shown in FIGURES 1 and 2 has a diameter of about 500 mm and minimum thickness of about one millimeter.

Further, while the container described above has been characterized as being spherical, it is to be understood that the tank could be oblong in shape, with hemispherical ends separated by a cylindrical mid-section, or any other shape depending upon the spacecraft in which the propellant tank is to be used, the shape of the preform and the mold in which the tank is to be formed.

While the invention has been described in connection with what is presently considered to be the most practical and preferred embodiment, it is to be understood that the invention is not limited to the disclosed embodiment, but, on the contrary, it is intended to cover various modifications and equivalent arrangements included within the spirit and scope of the appended claims.

## Claims

1. A propellant tank comprising:

a substantially spherical, one-piece propellant container having a propellent outlet and a gas inlet;

a substantially spherical bladder member mounted within said container, said bladder having a gas inlet port;

means for coupling said gas inlet port of said bladder to said gas inlet of said container.

2. A tank as in claim 1, wherein said outlet of said container as defined in the wall of said container diametrically opposite to said gas inlet of said container.

3. A tank as in claim 2, wherein said outlet includes a plug shaped member having a flange coupled to the container, said plug shaped member having a central aperture and a propellant outlet duct coupled thereto.

4. A tank as in claim 1, wherein said outlet comprises a plurality of apertures defined in a portion of a wall of said container, a cup member mounted to an outer surface of said container in surrounding relation to said apertures and an outlet duct coupled to said cup member for receiving propellent expressed through said apertures into said cup member.

5. A tank as in claim 2, further comprising a perforated cover member mounted interiorly of said container in surrounding relation to said outlet so as to prevent extrusion of said bladder into said outlet.

6. A tank as in claim 5, wherein said perforated cover includes a plate-like grid having a plurality of perforations therein.

7. A tank as in claim 5, wherein said perforated cover comprises a dome-shaped cover having a plurality of cutout portions defined about the peripheral edge thereof for defining peripheral outlet flow passages when the cover is mounted to the container interior surface.

8. A tank as in claim 1, further comprising a plurality of rib elements defined on the exterior surface of said bladder member.

9. A tank as in claim 2, wherein the thickness of said container wall varies from a maximum at said gas inlet and said outlet to a minimum at the midportion of the container, intermediate the inlet and the outlet.

10. A tank as in claim 1, further including a mounting bracket mounted to said gas inlet for mounting said tank to a spacecraft.

11. A tank as in claim 1, further comprising mounting brackets coupled at spaced locations about the mid portion of said container, said mounting brackets including apertures for coupling to a spacecraft.

12. A tank as in claim 1, further comprising a two part clamp having flanges and bolt holes, first and second halves of said clamp being hinged at one end thereof and mounted about the mid portion of the container by a clamp bolt.

13. A tank as in claim 2, further comprising first and second part spherical clamp members which each extend from respective pole portions of the container and coupled together through bolt holes defined therein, said clamp members each having an aperture through which said inlet and said outlet of the container extend.

14. A tank as in claim 1, further comprising a collar member mounted about the midportion of the container and a resin impregnated reinforcing filament overwinding said collar and said container.

15. A tank as in claim 1, further comprising first and second hemispherical-shaped pieces of tough netting material, each piece of netting being fixed to a ring having a flange, said flanges being coupled together to pull the netting material taught about the container.

16. A tank as in claim 2, further comprising four semi-circular straps each fixedly coupled to the gas inlet and to the outlet of the container, each said semi-circular strap being from two arc shaped straps each of which has a lug, said lugs being coupled together to define said respective strap said coupled lugs defining a mounting surface by which the tank assembly can be mounted to the spacecraft.

17. A tank as in claim 1, further comprising at least one or more brackets are mounted at one end thereof by bolts to a bracket mounting plate which is fixed to a disc element, plug, or cover plate by, for example, bolts (not shown), the opposite end of each bracket having an aperture for bolting the same to the spacecraft structure.

18. A propellant tank for a spacecraft comprising:

a propellant container having a gas inlet and a propellant outlet;

a bladder member mounted within said container and having a gas inlet port;

means for coupling said gas inlet port of said bladder to said gas inlet of said container including a disc member having a central aperture defined therethrough mounted in surrounding relation to said gas inlet of said said container, said bladder inlet port being inserted through said gas inlet of said container wall and engaging an inner wall surface of said aperture defined through said disc member; and a plug member inserted into said aperture of said disc member so as to clamp said gas inlet port of said bladder member between an outer wall surface of said plug member and said inner wall surface of said disc member, said plug member having means defined therethrough for delivering a gas to the interior of said bladder.

19. A tank as in claim 18, wherein said outlet of said container is defined in the wall of said container diametrically opposite to said gas inlet of said container.

20. A tank as in claim 19, wherein said outlet includes a plug shaped member having a flange coupled to the container, said plug shaped member having a central aperture and a propellant outlet duct coupled thereto.

21. A tank as in claim 18, wherein said outlet comprises a plurality of apertures defined in a portion of the wall said container, a cup member mounted to an outer surface of said container in surrounding relation to said apertures and an outlet duct coupled to said cup member for receiving propellant expressed through said apertures into said cup member.

22. A tank as in claim 18, further comprising a perforated cover member mounted interiorly of said container in surrounding relation to said outlet so as to prevent extrusion of said bladder into said outlet.

23. A tank as in claim 22, wherein said perforated cover includes a plate-like grid having a plurality of perforations therein.

24. A tank as in claim 22, wherein said perforated cover comprises a dome-shaped cover having a plurality of cutout portions defined about the peripheral edge thereof for defining peripheral outlet flow passages when the cover is mounted to the container interior surface.

25. A tank as in claim 19, wherein the thickness of said container wall varies from a maximum at said gas inlet and said outlet to a minimum at the midportion of the container, intermediate the inlet and the outlet.

26. A tank assembly as in claim 18, further including a mounting bracket mounted to said disc member for mounting said tank to a spacecraft.

27. A tank as in claim 18, wherein said inlet port of said bladder has a neck with a flange including an annular projection, said disc member having a slot corresponding to said projection for receiving said projection, said means for coupling further comprising a cover plate fixedly mounted to said disc member, an O-ring seal being provided intermediate said disc and said cover plate.

28. A method of forming a propellant tank comprising the steps of:

providing a substantially cylindrical preform;

closing first and second longitudinal ends of said cylindrical preform;

providing a pressurized air inlet in one of said closed end portions;

mounting said preform in a mold having a mold cavity corresponding in size and shape to a propellant container to be formed;

increasing the temperature of said preform;

applying pressurized air through said pressurized air inlet to superplastically deform said preform;

removing a container formed in said mold and severing cylindrical end portions thereof so as to define a bulbous container;

inserting a bladder having an inlet port into said container;

coupling said inlet port of said balloon to a gas inlet of said container defined at a said severed cylindrical end potion; and

forming a propellant outlet in a wall of said container.

**Fig.1.**

12  16  14  10  20  18

**Fig.2.**

16  24  28  22  18  20  26  28

**Fig.4.**

66  64  70  68  72  74  24

*Fig.3.*

*Fig.7.*

## Fig .5.

76

80

86

82

24

76

## Fig .6.

82

84

*Fig.8.*

76

112

76

112

*Fig.9.*

116

116

114

*Fig.10.*

122

116

116

118

118

114

118

120

## Fig . 11.

128
124
124
128

## Fig . 12.

128
124
126

## Fig . 13.

130
132

0 286 392

Neu eingereicht / Newly filed
Nouvellement déposé

Fig.14.

Fig.15.

Fig.16.

Fig.17.